# EUROPÄISCHE PATENTSCHRIFT

(11) **EP 2 064 039 B1**
(45) Veröffentlichungstag und Bekanntmachung des Hinweises auf die Patenterteilung: **15.12.2010**
(21) Anmeldenummer: 06805730.6
(22) Anmeldetag: 15.09.2006
(51) Int. Cl.: B29B 11/14

(54) **PREFORM SOWIE VERFAHREN ZUR HERSTELLUNG VON KUNSTSTOFFFLASCHEN**
PARISON AND METHOD FOR THE PRODUCTION OF PLASTICS BOTTLES
ÉBAUCHE ET PROCÉDÉ DE FABRICATION DE BOUTEILLES EN PLASTIQUE

(43) Veröffentlichungstag der Anmeldung: 03.06.2009
(73) Patentinhaber: Alpla-Werke Alwin Lehner GMBH & Co.KG, A-6971 Hard (AT)
(72) Erfinder: SIEGL, Robert, A-6850 Dornbirn (AT)
(74) Vertreter: Hasler, Erich
(86) Internationale Anmeldenummer: PCT/EP2006/008990
(87) Internationale Veröffentlichungsnummer: WO 2008/031447

(56) Entgegenhaltungen:
- WO-A-96/33062
- WO-A-2006/027092
- FR-A1- 2 846 946
- US-A- 3 934 743
- US-A1- 2004 091 651

## Beschreibung

Die Erfindung betrifft ein System Preform-Blasform für eine Kunststoffflasche, insbesondere für in einem Streckblasverfahren herstellbare PET-Flaschen, gemäss dem Oberbegriff des Patentanspruchs 1. Die Erfindung betrifft auch ein Verfahren zur Herstellung einer Kunststoffflasche aus einem Preform in einem Streckblasprozess gemäss dem Oberbegriff des unabhängigen Verfahrensanspruchs 7.

Die in der Vergangenheit üblichen Behältnisse aus Weiss- oder Buntblech, aus Glas oder auch aus Keramik werden in zunehmendem Masse von Behältnissen aus Kunststoff abgelöst. Insbesondere für die Verpackung von schüttfähige Medien, beispielsweise von Reinigungsutensilien, Körperpflegemitteln, Kosmetika, Kfz-Medien, usw., kommen hauptsächlich Kunststoffbehältrisse zum Einsatz. Das geringe Gewicht und die geringeren Kosten spielen sicher eine nicht unerhebliche Rolle bei dieser Substitution. Die Verwendung rezyklierbarer Kunststoffmaterialien und die insgesamt günstigere Gesamtenergiebilanz bei ihrer Herstellung tragen auch dazu bei, die Akzeptanz von Kunststoffbehältnissen, insbesondere von Kunststoffflaschen, beim Konsumenten zu fördern.

Die am häufigsten eingesetzten Kunststoffflaschen bestehen aus Polyethylenterephthalat bzw. PET oder dessen leicht abgewandelten Copolyestern und werden meist in einem sogenannten Spritzstreckblasverfahren hergestellt. Bei diesen Verfahren handelt es sich um eine Kombination aus Spritzgiessen und Blasformen. Dabei wird zunächst in einem Spritzgiessprozess in einer Spritzform ein Preform hergestellt. Neuerdings sind auch Fliesspressverfahren zur Herstellung von Preforms vorgeschlagen worden. Der Preform weist einen im wesentlichen länglichen, zylindrischen Körper auf, an dessen einem Längsende ein Boden ausgebildet ist. Ein Supportring trennt den Körper von einem Halsabschnitt mit einer Ausgiessöffnung. Dieser Halsabschnitt weist üblicherweise bereits die spätere Form des Flaschenhalses auf. An der Aussenseite dieses Halsabschnitts sind auch meist bereits Gewindeabschnitte oder dergleichen für die Festlegung eines Verschlussteils ausgebildet. Der Preform wird nach seiner Herstellung in einem Kunststoffspritzverfahren aus der Spritzform entformt, bei Bedarf konditioniert und in eine Blasform einer Blasmaschine eingebracht, in welcher er schliesslich mit Überdruck auf die gewünschte Form aufgeblasen und zusätzlich mit einem Reckdorn verstreckt wird. Es ist auch bereits ein Spritzblasverfahren bekannt, bei dem der Blasprozess direkt anschliessend an das Spritzen des Preforms erfolgt. Der Preform verbleibt dabei auf dem Spritzdorn, und ein Teil der Spritzform bildet einen Abschnitt der Blasform.

Im Streckblasverfahren des reinen PET und dessen leicht abgewandelten Copolyestern, vor allem mit Isophthalsäure, haben sich gewisse Streckverhältnisse etabliert, wobei die Auslegung der Preforms (Rohlinge) üblicherweise durch ein Längs-Streckverhältnis von 2 bis 4 und ein Durchmesser-Streckverhältnis von 2 - 5 festgelegt ist. Das globale Streckverhältnis, das als das Produkt der beiden Streckverhältnisse definiert ist, beträgt dabei in der Regel zwischen 6 und 14. Der Übergang zwischen dem nicht verreckten Hals und dem verstreckten Körper der Flasche stellt bekanntermassen einen Schwachpunkt dar, da das Material hier schlecht verstreckt wird. Vielfach kommt es in diesem Bereich, der auch als Preform-Anlauf bezeichnet wird, zu einer Materialverschwendung durch unnötige Materialanhäufungen, was mit Hinblick auf die Materialkosten äusserst unerwünscht ist. Das schlecht verstreckte Material im Preform-Anlauf weist oft auch eine geringere Temperatur- und Zug-/Druckbeständigkeit auf. Dies kann insbesondere bei erhöhten Temperaturen zu schiefen oder aufgedehnten Hälsen und dergleichen Problemen führen. Besonders betroffen von der geschilderten Problematik sind Kunststoffflaschen aus der Getränkeindustrie, die unter einem Stickstoff- oder Kohlendioxid-Innendruck stehen. Aber auch in der Aerosol-Industrie eingesetzte Kunststoffflaschen sind davon betroffen, werden diese Kunststoffflaschen im Einsatz doch einem Innendruck von Stickstoff, Kohlendioxid, Propan, Butan, FCKW, FKW oder Mischungen der genannten Gase ausgesetzt. Die Probleme können vor allem bei Kunststoffflaschen mit einem Füllvolumen von ca. 50 ml bis ca. 660 ml und einem Innendruck von 0,5 bar bis etwa 5 bar bei Temperaturen von 15°C bis ca. 35°C auftreten.

Die WO 96/33062 offenbart einen Preform mit einem Hals und einer Ausgiessöffnung. Der Preform besteht aus einer Mischung von PEN Copolymer und PET Homopolymer. Das Streckverhältnis zur Herstellung eines balsgeformten Behälters beträgt 18:1 bis 25:1.

Zur Herstellung des blasgeformten Behälters wird der Preform in einer Blasform angeordnet. Die Blasform besitzt einen oberen Formbereich, welcher den Hals des Preforms aufnimmt. Ferner besitzt die Blasform einen mittleren Formbereich, welcher die Seitenwände des Behälters während des Blasverfahrens ausformt und einen unteren Formbereich, welcher den Boden des Behälters formt. In einem Standard-Blasformverfahren wird der Preform zuerst auf eine Temperatur erwärmt, welche zum Strecken und Aufblasen in der Blasform geeignet ist. Ein Blasdom wird in die Ausgiessöffnung eingeführt und verstreckt den Preform in Längsrichtung. Mittels eines Expansionsgases wird die Schulter, die Seitenwand und der Boden des Preforms gleichzeitig oder nachfolgend zur Axialverstreckung in radialer Richtung ausgedehnt, bis diese mit den Formbereichen in Kontakt treten.

Aufgabe der vorliegenden Erfindung ist es daher, einen Preform für die Herstellung von Kunststoffflaschen, insbesondere PET-Flaschen, in einem Streckblasverfahren dahingehend zu verbessern, dass den geschilderten Problemen abgeholfen wird. Materialverschwendungen infolge von lokalen Materialanhäufungen sollen angesichts knapper Resourcen und gesteigerten Umweltbewusstseins vermieden werden. Schwachstellen im Bereich des Preform-Anlaufs sollen vermieden werden. Es soll ein Preform geschaffen werden, der in den bekannten Streckblasanlagen verarbeitbar ist. Die fertige streckgeblasen Kunststoffflasche soll auf konventionelle Art in den Abfüllanlagen eingesetzt werden können. Die geforderten mechanischen Festigkeiten und die thermische Stabilität der daraus gefertigten Kunststoffflasche müssen gewährleistet bleiben. Der Preform soll im Spritzgiessverfahren oder auch in einem Fliesspressverfahren massentechnisch herstellbar sein.

Die Lösung dieser teils widersprüchlichen Aufgaben besteht in einem System für in einem Streckblasverfahren herstellbare Kunststoffflaschen, insbesondere PET-Flaschen, welcher die im kennzeichnenden Abschnitt des Patentanspruchs 1 aufgelisteten Merkmale aufweist. Weiterbildungen und/oder vorteilhafte Ausführungsvarianten der Erfindung sind Gegenstand der abhängigen Patentansprüche. Die Aufgaben werden auch durch ein Verfahren zur Herstellung einer Kunststoffflasche aus einem Preform in einem Streckblasprozess gelöst, welches die im kennzeichnenden Abschnitt des unabhängigen Verfahrensanspruchs 7 aufgelisteten Verfahrensschritte aufweist.

Durch die Erfindung wird ein Preform zur Herstellung von Kunststoffflaschen, insbesondere PET-Flaschen, geschaffen, der einen starren, im wesentlichen länglichen Körper besitzt, der an seinem einen Längsende einen Boden aufweist. An seinem gegenüberliegenden Längsende grenzt der Körper des Preforms an einen mit einer Ausgiessöffnung versehenen Halsabschnitt, der durch einen radial abragenden, flanschartigen Supportring vom Körper getrennt ist, und unterhalb des Supportrings einen Preform-Anlauf aufweist. Der Preform weist einen am Übergang vom Körper zum Boden gemessenen Aussendurchmesser von 17.4 mm - 21. 4 mm und eine Wandstärken von 3.4 mm bis 4.4 mm auf. Weiters besitzt der Prefom am Preform-Anlauf eine Wandstärke von 1.4 mm - 2.2 mm. Der Aussendurchmesser am Preform-Anlauf ist derart bemessen, dass er bei in die Blasform eingesetztem Preform einen Abstand zur Blasformwandung aufweist, der 1.2 mm - 3 mm beträgt.

Die erfindungsgemässe Merkmalskombination erlaubt eine optimale Längs-Verstreckung des Preform-Anlaufs. Der Preform-Anlauf kommt erst in Anlage zur Blasformwandung, nachdem er ausreichend verstreckt worden ist. Dadurch können unerwünschte Materialanhäufungen im Preform-Anlauf vermieden werden. Kommt der Preform-Anlauf nämlich zu früh in Anlage zur Blasformwandung, wird dieser gekühlt, der Kunststoff erstarrt und kann in diesem Bereich nicht weiter verstreckt werden. Durch die optimale Verstreckung des Preforms im Preform-Anlauf weist das Kunststoffmaterial die erforderlichen Beständigkeiten hinsichtlich Temperatur und Zug-/Druckbelastung auf. Die erfindungsgemässe Merkmalskombination erlaubt globale Verstreckungsverhältnisse zwischen 8 und 16, was dem Hersteller grosse Freiheiten hinsichtlich der Formgebung für die Kunststoffflaschen einträgt.

Mit Hinblick darauf, dass die eingesetzten Kunststoffe durch die Verstreckung ihre physikalischen Eigenschaften zum Teil sehr stark ändern, ist der Preform für ein Längs-Streckverhältnis von 2 - 5 ausgebildet. Bei diesen Längs-Streckverhältnissen sind optimale Eigenschaften der eingesetzten Kunststoffe erzielbar.

Der Preform weist für die Herstellung von in der Getränkeindustrie eingesetzte Kunststoffflaschen am Preform-Anlauf mit Vorteil einen Aussendurchmesser von 24.2 mm bis 25.2 mm auf. Preforms für den Einsatz in der Aerosolindustrie weisen mit Vorteil am Preform-Anlauf einen Aussendurchmesser von 27.7 mm - 28.7 mm auf. Bei grösseren Aussendurchmessern oder kleineren Wandstärken im Preform-Anlauf berührt der Preform die Blasformwandung zu früh, und der Kunststoff kann nicht mehr ausreichend verstreckt werden. Bei zu kleinen Aussendurchmessem im Bereich des Preform Anlaufs besteht die Gefahr, dass der Preform an dieser Stelle nicht ausreichend aufgeblasen werden kann. Dies kann zu Problemen mit Systemen führen, die der Streckblasanlage nachgeschaltet sind.

Als Materialien für den Preform erweisen sich PET oder dessen Copolyestern, insbesondere mit Isophthalsäure, als sehr vorteilhaft hinsichtlich ihrer mechanischen, thermischen und chemischen Eigenschaften.

Kunststoffflaschen, die aus einem erfindungsgemässen Preform in einem Streckblasprozess hergestellt sind, weisen auch am Übergang vom Flaschenhals zum Flaschenkörper keine Schwachstelle auf. Unerwünschte Materialanhäufungen infolge unzureichender Verstreckung sind vermieden. Die Flaschen weist auch am Übergang eine ausreichende thermische Beständigkeit und eine hohe Zug-/ Druckbeständigkeit auf. Das Problem schiefer oder ausgedehnter Hälse ist beseitigt.

Bei dem erfindungsgemässen Verfahren zur Herstellung einer Kunststoffflasche in einem Streckblasprozess wird ein Preform mit einem starren, im wesentlichen länglichen Körper, der an seinem einen Längsende einen Boden aufweist und an seinem gegenüberliegenden Längsende an einen mit einer Ausgiessöffnung versehenen Halsabschnitt angrenzt, der von einem radial abragenden, flanschartigen Supportring vom Körper getrennt ist, und unterhalb des Supportrings eine Preform-Anlauf aufweist, in eine Blasform eingesetzt und dort mit einem Reckdorn verstreckt und durch Überdruck gemäss der Formkavität der Blasform aufgeblasen und die fertige Kunststofffla-sche entformt. Der Preform wird derart in die Blasform eingesetzt, dass der Preform-Anlauf von der Blasformwandung einen Abstand von 1.2 bis 3 mm aufweist. In einem ersten Verfahrensschritt wird der Preform-Anlauf durch den Reckdorn verstreckt, ohne dabei den Preform-Anlauf in Anlage zur Blasformwandung zur bringen. Erst in einem darauffolgenden Verfahrensschritt wird der Körper des Preforms hinsichtlich seiner Länge und seines Durchmessers verstreckt.

Durch die erfindungsgemässe Verfahrensführung wird der Preform-Anlauf optimal verstreckt, so dass Materialansammlungen vermieden werden. Ebenso werden Schwachstellen der fertig streckgeblasenen Flasche am Übergang vom Hals zum Flaschenkörper vermieden. Indem der Preform-Anlauf zunächst verstreckt wird, ohne dass dabei durch den Vorblasdruck der Preform-Anlauf in Anlage zur Blasformwandung gelangt, behält der Preform serine volle Verformbarkeit. Ein partielles Erstarren des Materials des Preforms im Anlagebereich zur kälteren Blasformwandung wird verhindert. Die optimale Verstreckung des Preform-Anlaufs ist dabei durch den Abstand desselben von der Blasformwandung und durch die mechanischen Dimensionierungen des Preforms gewährleistet.

Der Verfahrensschritt des Verstreckens des Preformanlaufs erfolgt bei den üblichen Reckgeschwindigkeiten innerhalb der ersten 200 ms des Streckblasverfahrens.

Zur Erzielung der gewünschten globalen Verstreckung und damit der gewünschten Eigenschaften des eingesetzten Kunststoffmaterials wird der Preform in der Blasform mit einem Längs-Streckverhältnis von 2 - 5 verformt.

Mit Vorteil wird ein Preform in die Blasform eingesetzt, der am Übergang vom Körper zum Boden einen Aussendurchmesser von 17.4 mm - 21. 4 mm und eine Wandstärke von 3.4 mm bis 4.4 mm und am Preform-Anlauf eine Wandstärke von 1.4 mm - 2.2 mm aufweist. Bei einer grösseren oder auch kleineren Wandstärke des Körpers des Preforms entwickelt der Preformkörper bei der Längsverstreckung durch den Reckdorn nicht genügend Zugkraft, um genügend Material aus dem Preform-Anlauf zu ziehen. Die Zugkraft des Preformkörpers ist dabei proportional zu dem zu verstreckenden Querschnitt, der durch die Wandstärke und durch den Aussendurchmesser des Preformkörpers bestimmt ist. Bei einem kleineren Aussendurchmesser sinkt die Zugkraft unter das erforderliche Mass. Bei einem grösseren Aussendurchmesser steigt die Zugkraft. Dies kann zu einer Überstreckung des Preform-Anlaufs und zu einer unerwünschten Farbveränderung, meist ins Weissliche, führen.

Für die Herstellung von Kunststoffflaschen für den Einsatz in der Getränkeindustrie weist der in die Blasform eingesetzte Preform weist am Preform-Anlauf mit Vorteil einen Aussendurchmesser von 24.2 mm bis 25.2 mm auf. Für die Herstellung von Kunststoffflaschen, die in der Aerosolindustrie eingesetzt werden, werden Preforms in die Blasform eingesetzt, deren Preform-Anlauf einen Aussendurchmesser von 27.7 bis 28.7 mm aufweist. Bei einem grösseren Aussendurchmesser berührt der Preform die Blasformwandung zu früh. Das Kunststoffmaterial kühlt ab und kann nicht mehr im gewünschten Umfang verstreckt werden. Ist der Aussendurchmesser zu klein, besteht die Gefahr, dass der Preform im Bereich des Preform-Anlaufs nicht mehr vollständig aufgeblasen wird und es Probleme mit der Masshaltigkeit der fertig streckgeblasenen Kunststoffflasche gibt.

Weitere Vorteile und Merkmale ergeben sich aus der nachfolgenden Beschreibung eines Ausführungsbeispiels der Erfindung unter Bezugnahme auf die schematischen Zeichnungen. Es zeigen in nicht massstabsgetreuer Darstellung:
- Fig.1: einen Axialschnitt eines Preforms; und
- Fig. 2: ein axial geschnittene Darstellung des in eine Blasform eingesetzten Preforms aus Fig. 1.

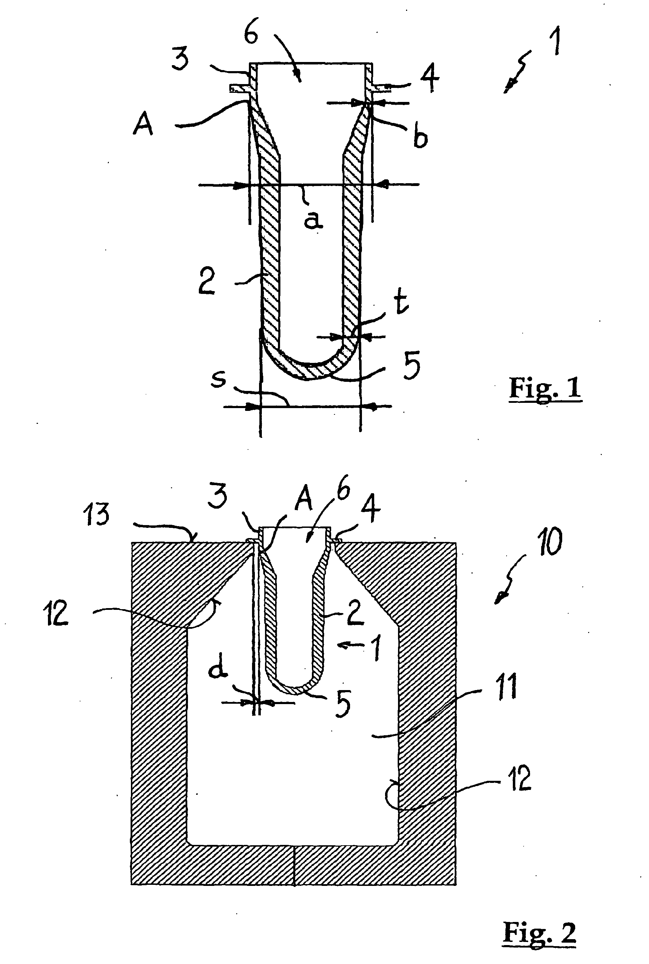

Ein Ausführungsbeispiel des erfindungsgemässen Preforms ist in Fig. 1 gesamthaft mit dem Bezugszeichen 1 versehen. Der Preform 1 besteht üblicherweise aus PET oder dessen Copolyestern, insbesondere mit Isophthalsäure. Der Preform 1 besitzt einen starren, im wesentlichen länglichen Körper 2, der an seinem einen Längsende einen Boden 5 aufweist. An seinem gegenüberliegenden Längsende grenzt der Körper 2 des Preforms 1 an einen mit einer Ausgiessöffnung 6 versehenen Halsabschnitt 3, der durch einen radial abragenden, flanschartigen Supportring 4 vom Körper 2 getrennt ist. Auf die Darstellung von Gewindeabschnitten oder dergleichen, die am Halsabschnitt 3 des Preforms 1 ausgebildet sind, wurde aus Gründen der Übersichtlichkeit verzichtet. Unterhalb des Supportrings weist der Preform einen Preform-Anlauf A auf. Die Preform-Anlauf A befindet sich an der Aussenseite des Preforms, 5 mm unterhalb des Supportrings 4 und verläuft ringförmig um den Preform 1. Der Preform 1 weist einen am Übergang vom Körper 2 zum Boden 5 gemessenen Aussendurchmesser s von 17.4 mm - 21. 4 mm. Seine Wandstärke t beträgt am Übergang 3.4 mm bis 4.4 mm. Am Preform-Anlauf A weist der Preform eine Wandstärke von 1.4 mm - 2.2 mm. Der Aussendurchmesser a am Preform-Anlauf A beträgt bei Preforms 1 für die Herstellung von Flaschen für in der Getränkeindustrie 24.2 mm - 25.2 mm. Für die Herstellung in der Aerosolindustrie eingesetzten Kunststoffflaschen beträgt der Aussendurchmesser a des Preforms 1 am Preform-Anlauf A 27.7 mm - 28.7 mm.

Der erfindungsgemässe Preform 1 erlaubt globale Streckverhältnisse von 8 bis 16. Das globale Streckverhältnis ist dabei definiert als das Produkt des Längen-Streckverhältnisses und des Durchmesser-Streckverhältnisses. Das Längen-Streckverhältnis ergibt sich definitionsgemäss aus dem Verhältnis der Länge der streckgeblasenen Flasche zur Länge des Preforms. Die Längen der Flasche ist durch die abgewickelte Länge vom Supportring bis über den Flaschenboden gegeben. Die Länge des Preforms ist wegen seiner grösseren Wandstärke als die mittlere abgewickelte Länge vom Supportring bis über den Boden des Preforms definiert. Das Durchmesser-Streckverhältnis ergibt sich aus dem Verhältnis des Aussendurchmessers der Flasche zum Aussendurchmesser des Preforms. Als Aussendurchmesser des Preforms gilt dabei wegen der relativ grossen Wandstärke des Preforms der mittlere Aussendurchmesser am Übergang vom Körper 2 des Preforms 1 zum Boden 5 des Preforms 1. Als Aussendurchmesser der Flasche gilt deren maximaler Aussendurchmesser. Der erfindungsgemässe Preform 1 ist für die Erzielung von Längen-Streckverhältnissen von 2 - 5 ausgebildet.

Fig. 2 zeigt den in eine Blasform 10 eingesetzten Preform 1. Dabei bezeichnen gleiche Bezugszeichen gleiche Elemente des Preforms 1. Die Blasform 10 besteht beispielsweise aus zwei Blasformhälften, deren Blasformwandungen 12 im geschlossenen Zustand eine Formkavität 11 begrenzen. Der Körper 2 des Preforms 1 ragt in die Blasformkavität 11. Dabei stützt sich der Preform 1 über den Supportring 4 an der Oberseite 13 der Blasform 10 ab. Der Preform 1 wird derart in die Blasform 10 eingesetzt, dass der Preform-Anlauf A zur Blasformwandung 12 einen mit dem Bezugszeichen d versehenen Abstand aufweist, der 1.2 mm - 3 mm beträgt.

Der Abstand der Preform-Anlaufs A zur Blasformwandung 12 gewährleistet in Verbindung mit dem Aussendurchmesser s des Preforms und den Wandstärken b, t am Preform-Anlauf A und am Übergang vom Körper 2 zum Boden 5 des Preforms 1 eine optimale Verstreckung des Preforms am Preform-Anlauf A. Dabei wird beim Streckblasen bei den üblichen Vorschubgeschwindigkeiten des Reckdorns innerhalb der ersten etwa 200 ms zunächst der Preform-Anlauf A verstreckt, ohne dass dieser dabei in Anlage zur Blasformwandung 12 kommt. Die Dimensionierung des Preforms 1 gewährleistet bei der Längsverstreckung eine ausreichend grosse Zugkraft auf den Preform-Anlauf A, damit genügend Material von dort abgezogen wird. Wegen der erfindungsgemässen Dimensionierung des Preforms 1 erfolgen die Längsverstreckung und die Durchmesserstreckung des Körpers 2 des Preforms 1 unmittelbar im Anschluss an die Längsverstreckung des Preform-Anlaufs A. Erst in diesem nachfolgenden Verfahrensschritt, in dem der Preform 1 durch den Blasdruck vollständig aufgeblasen wird, gelangt der Preform-Anlauf A in Anlage zur Blasformwandung 12, wo er so weit abgekühlt wird, dass das Kunststoffmaterial erstarrt. Die fertig geblasenene Kunststoffflasche wird schliesslich entformt.

Der erfindungsgemässe Preform und die erfindungsgemässe Verfahrensführung beim Streckblasprozess erlauben eine optimale Längs-Verstreckung des Preform-Anlaufs. Der Preform-Anlauf kommt erst in Anlage zur Blasformwandung, nachdem er ausreichend verstreckt worden ist. Dadurch können unerwünschte Materialanhäufungen im Preform-Anlauf vermieden werden. Durch die optimale Verstreckung des Preforms im Preform-Anlauf weist das Kunststoffmaterial die erforderlichen Beständigkeiten hinsichtlich Temperatur und Zug-/Druckbelastung auf. Die erfindungsgemässe Merkmalskombination bzw. Verfahrensführung erlaubt globale Verstreckungsverhältnisse zwischen 8 und 16, was dem Hersteller grosse Freiheiten hinsichtlich der Formgebung für die Kunststoffflasche gibt.

## Patentansprüche

1. System zur Herstellung von Kunststoffflaschen, insbesondere PET-Flaschen, in einem Streckblasverfahren, mit einer Blasform (10) und einem Preform (1) mit einem starren, im wesentlichen länglichen Körper (2), der an seinem einen Längsende einen Boden (5) aufweist und an seinem gegenüberliegenden Längsende an einen mit einer Ausgiessöffnung (6) versehenen Halsabschnitt (3) angrenzt, der von einem radial abragenden, flanschartigen Supportring (4) vom Körper (2) getrennt ist, und unterhalb des Supportrings (4) einen Preform-Anlauf (A) aufweist, und welcher Preform einen am Übergang vom Körper (2) zum Boden (5) gemessenen Aussendurchmesser (s) von 17.4 mm - 21. 4 mm und dort eine Wandstärke (t) von 3.4 mm bis 4.4 mm aufweist und welcher Preform (1) am Preform-Anlauf (A) eine Wandstärke (b) von 1.4 mm - 2.2 mm aufweist,
**dadurch gekennzeichnet,**
**dass** der Aussendurchmesser (a) am Preform-Anlauf, (A) derart bemessen ist, dass er bei in die Blasform (10) eingesetztem Preform (1) einen Abstand (d) zur Blasformwandung (12) aufweist, der 1.2 mm - 3 mm beträgt.

2. System nach Anspruch 1, **dadurch gekennzeichnet, dass** der Preform (1) für ein Längs-Strerkverhältnis von 2 - 5 ausgebildet ist.

3. System nach Anspruch 1 oder 2, **dadurch gekennzeichnet, dass** der Preform (1) am. Preform-Anlauf (A) einen Aussendurchmesser (a) vom 24.2 mm bis 25.2 mm aufweist.

4. System nach Anspruch 1 oder 2, **dadurch gekennzeichnet, dass** der Preform (1) am Preform-Anlauf (A) einen Aussendurchmesser (a) von 27.7 mm - 28.7 mm aufweist.

5. System nach einem der vorangehenden Ansprüche, **dadurch gekennzeichnet, dass** er aus PET oder dessen Copolyestern, insbesondere mit Isophthalsäure, besteht.

6. Kunststoffflasche hergestellt aus einem Preform (1) gemäss einem der vorangehenden Ansprüche in einem Streckblasverfahren.

7. Verfahren zur Herstellung einer Kunststoffflasche in einem Streckblasprozess, bei dem ein Preform (1) mit einem starren, im wesentlichen länglichen Körper (2), der an seinem einen Längsende einen Boden (5) aufweist und an seinem gegenüberliegenden Längsende an einen mit einer Ausgiessöffnung (6) versehenen Halsabschnitt (3) angrenzt, der von einem radial abragenden, flanschartigen Supportring (4) vom Körper (2) getrennt ist, und unterhalb des Supportrings (4) einen Preform-Anlauf (A) aufweist, in eine Blasform (10) eingesetzte und dort in seinem ersten Verfahrens schritt mit einem Reckdorn verstreckt wird und in einem weiteren Verfahrenschritt durch Überdruck gemäss der Formkavität (11) der Blasform (10) hinsichtlich seiner Länge und seines Durchmessers verstreckt wird, und die fertige Kunststoffflasche entformt wird, **dadurch gekennzeichnet, dass** der Preform (1) derart in die Blasform (10) eingesetzt wird, dass der Preform-Anlauf (A) von der Blasformwandung (12) einen Abstand von 1.2 bis 3 mm aufweist und der Preform-Anlauf (A) in dem ersten Verfahrensschritt durch den Reckdorn verstreckt wird, ohne dabei den Preform-Anlauf (A) in Anlage zur Blasformwandung, (12) zur bringen.

8. Verfahren nach Anspruch 7, **dadurch gekennzeichnet, dass** der Verfahrensschritt des Verstreckens des Preform-Anlaufs (A) innerhalb der ersten 200 ms des Strerkblasverfahrens erfolgt.

9. Verfahren nach Anspruch 7 oder 8, **dadurch gekennzeichnet, dass** Preform (A) in der Blasform (10) mit einem Längs-Streckverhältnis von 2 - 5 gereckt wird.

10. Verfahren nach einem der Ansprüche 7 - 9, **dadurch gekennzeichnet, daß** ein Preform (1) in die Blasform (10) eingesetzt wird, der am Übergang vom Körper (2) zum Boden (5) einen Aussendurchmesser (s) von 17.4 mm - 21. 4 mm und eine Wandstärke (t) von 3.4 mm bis 4.4 mm und am Preform-Anlauf (A) eine Wandstärke (b) von 1.4 mm - 2.2 mm aufweist.

11. Verfahren nach Anspruch 10, **dadurch gekennzeichnet, dass** ein Preform (1) in die Blasform (10) eingesetzt wird, dessen Preform-Anlaüf (A) einen Aussendurchmesser (a) von 24.2 mm bis 25.2 mm beträgt.

12. Verfahren nach Anspruch 10, **dadurch gekennzeichnet, dass** ein Preform (1) in die Blasform (10) eingesetzt wird, dessen Preform-Anlauf (A) einen Aussendurchmesser (a) von 27.7 bis 28.7 mm aufweist.

13. Verfahren nach einem der Ansprüche 7 -12, **dadurch gekennzeichnet, dass** ein Preform (1) in die Blasform (10) eingesetzt wird, der aus PET oder dessen Copolyestern, insbesondere mit Isophthalsäure, besteht.

## Claims

1. A system for producing plastic bottles, in particular PET-bottles, in a stretch-blow-molding process, comprising a blow mold (10) and a parison (1) having a rigid, essentially longitudinal body (2) having a base (5) at one longitudinal end and at an opposite longitudinal end adjoining a neck section (3) provided with a pouring aperture (6):
the neck section (3) separated from the body by a radially protruding, flange-like support ring (4); and
a parison shoulder (A) below the support ring (4), the parison having an outer diameter (s) at a transition from the body (2) to the base (5) measuring 17.4 mm-21.4 mm and a wall thickness (t) at the transition of 3.4 mm to 4.4 mm, and the parison shoulder (A) having a wall thickness of 1.4 mm-2.2 mm
**characterized in**
**that** the outer diameter (a) at the parison shoulder (A) has a clearance relative to a blow mold wall (12) measuring 1.2 mm-3 mm when the parison (1) is inserted into the blow mold (10).

2. The system according to claim 1, **characterized in that** the parison (1) is configured to have a longitudinal stretch ratio of 2-5.

3. The system according to claim 1 or 2, **characterized in that** the parison (1) has an outer diameter of 24.2 mm to 25.2 mm at the parison shoulder (A).

4. The system according to claim 1 or 2, wherein the parison (1) has an outer diameter of 27.7 mm to 28.7 mm at the parison shoulder (A).

5. The system according to one of the preceding claims, **characterized in that** the parison is comprised of PET, copolyesters of PET or isophthalic acid.

6. Plastic bottle produced of a parison (1) according to one of the preceding claims by a stretch-blow-molding-process.

7. A method of producing a plastic bottle in a stretch-blow-molding process, comprising:
inserting a parison (1) in a blow mold (10) having a blow mold wall, the parison (1) comprising a rigid, essentially longitudinal body (2) that has a base (5) at one longitudinal end and a neck section (3) provided with a pouring aperture (6) at an opposite longitudinal end, the neck section (3) separated from the body (2) by a radially protruding flange-like support ring (4) and a parison shoulder (A);
stretching the parison (1) with a stretching core in a first process step, expending the parison (1) by high pressure in accordance with the mold cavity (11) of the blow mold (10) to stretch the length and diameter of the body of the parison (1) in a further process step; and
releasing the finished plastic bottle from the mold (10)
**characterized in that** the parison (1) is inserted in the blow mold (10) in such a way that the parison shoulder (A) has a clearance of 1.2 to 3 mm from the blow mold wall (12) and
thereby the parison shoulder (A) is stretched in the first process step without bringing the parison shoulder (A) into contact with the blow mold wall (12).

8. The method according to claim 7, **characterized in that** the process step of stretching comprises stretching the parison shoulder (A) within the first 200 ms of a stretch-blow-molding process.

9. The method according to claim 7 or 8, **characterized in that** the parison within the blow mold is stretched at a longitudinal stretch ratio of 2-5.

10. The method according to claim 7 - 9, **characterized in that** a parison (1) having at outer diameter (s) of 17.4 mm-21.4 mm and a wall thickness (t) of 3.4 mm to 4.4 mm at the transition from the body (2) to the base (5) and a wall thickness (b) of 1.4 mm-2.2 mm at the parison shoulder (A) is inserted into the blow mold (10).

11. The method according to claim 10, **characterized in that** a parison (1) is inserted into me blow mold (10) wherein the parison shoulder has an outer diameter measuring 24.2 mm to 25.2 mm.

12. The method according to claim 10, **characterized in that** a parison (1) is inserted into the blow mold (10), wherein the parison shoulder (A) has an outer diameter (a) measuring 27.7 mm to 28.7 mm.

13. The method according to one of claim 7 -12, **characterized in that** a parison (1) which consists of PET, copolyesters of PET or isophthalic acid is inserted into the blow mold (10).

## Revendications

1. Système pour fabriquer des bouteilles en matière plastique, en particulier des bouteilles en polyéthylène, selon un procédé par étirage et gonflage, avec un moule de soufflage (10) et un moule ébaucheur (1) avec un corps rigide, substantiellement allongé (2), qui présente, à l'une de ses extrémités longitudinales, un fond (5) et qui est adjacent, à son extrémité longitudinale opposée, à une section de col (3) pourvue d'une ouverture pour verser (6) qui est séparée du corps (2) par un anneau de support (4) de type bride qui fait saillie radialement et qui présente, en dessous de l'anneau de support (4), un épaulement de moule ébaucheur (A) et lequel moule ébaucheur présente un diamètre extérieur (s) de 17,4 mm à 21,4 mm mesuré à la transition du corps (2) et du fond (5) et qui y présente une épaisseur de paroi (t) de 3,4 mm à 4,4 mm et lequel moule ébaucheur (1) présente, à l'épaulement de moule ébaucheur (A), une épaisseur de paroi (b) de 1,4 mm à 2,2 mm,
**caractérisé en ce**
**que** le diamètre extérieur (a) sur l'épaulement de moule ébaucheur (A) est dimensionné tel que, lorsque le moule ébaucheur (1) est inséré dans le moule de soufflage (10), il présente une distance (d) par rapport à la paroi du moule de soufflage (12) qui est de 1,2 mm à 3 mm.

2. Système selon la revendication 1, **caractérisé en ce que** le moule ébaucheur (1) est configuré pour un rapport d'étirage en longueur de 2 à 5.

3. Système selon la revendication 1 ou 2, **caractérisé en ce que** le moule ébaucheur (1) présente, sur l'épaulement du moule ébaucheur (A), un diamètre extérieur (a) de 24,2 mm à 25,2 mm.

4. Système selon la revendication 1 ou 2, **caractérisé en ce que** le moule ébaucheur (1) présente, sur l'épaulement du moule ébaucheur (A), un diamètre extérieur (a) de 27,7 mm à 28,7 mm.

5. Système selon l'une des revendications précédentes, **caractérisé en ce qu'**il est en polyéthylène ou en copolyesters de polyéthylène, en particulier avec de l'acide isophtalique.

6. Bouteille en matière plastique fabriquée à partir d'un moule ébaucheur selon l'une des revendications précédentes dans un procédé par étirage et gonflage.

7. Procédé pour la fabrication d'une bouteille en matière plastique selon un procédé par étirage et gonflage pour lequel un moule ébaucheur (1), avec un corps rigide, substantiellement allongé (2) qui présente un fond (5) à l'une de ses extrémités longitudinales et qui est adjacent, à son extrémité longitudinale opposée, à une section de col (3) pourvue d'une ouverture pour verser (6) qui est séparée du corps (2) par un anneau de support (4) de type bride qui fait saillie radialement et qui présente, en dessous de l'anneau de support (4), un épaulement de moule ébaucheur (A), est inséré dans un moule de soufflage (10) et y est étiré dans une première étape de procédé avec un mandrin d'étirage et qui, dans une autre étape de procédé, est encore étiré par surpression selon la cavité de moule (11) du moule de soufflage (10) pour ce qui est de sa longueur et de son diamètre et la bouteille en matière plastique finie est formée, **caractérisé en ce que** le moule ébaucheur (1) est inséré dans le moule de soufflage (10) de telle manière que l'épaulement de moule ébaucheur (A) présente, par rapport à la paroi du moule de soufflage (12) un écart de 1,2 à 3 mm et que l'épaulement de moule ébaucheur (A) est étiré dans une première étape de procédé par le mandrin d'étirage sans amener l'épaulement de moule ébaucheur (A) à se poser contre la paroi du moule de soufflage (12).

8. Procédé selon la revendication 7, **caractérisé en ce que** l'étape de procédé d'étirage de l'épaulement du moule ébaucheur (A) se fait dans les premières 200 ms du procédé d'étirage et gonflage.

9. Procédé selon la revendication 7 ou 8, **caractérisé en ce que** le moule ébaucheur (A) est étiré dans le moule de soufflage (10) avec un rapport d'étirage en longueur de 2 à 5.

10. Procédé salon l'une des revendications 7 à 9, **caractérisé en ce qu'**un moule ébaucheur (1) est inséré dans le moule de soufflage (10) qui présente, à la transition du corps (2) et du fond (5), un diamètre extérieur (s) de 17,4 mm à 21,4 mm et une épaisseur de paroi (t) de 3,4 mm à 4,4 mm et, sur l'épaulement du moule ébaucheur (A), une épaisseur de paroi (b) de 1,4 mm à 2,2 mm.

11. Procédé selon la revendication 10, **caractérisé en ce qu'**un moule ébaucheur (1) dont l'épaulement de moule ébaucheur (A) a un diamètre extérieur (a) de 24, 2 mm à 25, 2 mm, est inséré dans le moule de soufflage (10).

12. Procédé selon la revendication 10, **caractérisé en ce qu'**un moule ébaucheur (1) dont l'épaulement de moule ébaucheur (A) a un diamètre extérieur (a) de 27,7 à 28,7 mm est inséré dans le moule de soufflage (10).

13. Procédé selon l'une des revendications 7 à 12, **caractérisé en ce qu'**un moule ébaucheur qui est en polyéthylène ou en copolyesters de polyéthylène, en particulier avec de l'acide isophtalique, est inséré dans le moule de soufflage (10).
